Europäisches Patentamt

European Patent Office

Office européen des brevets

(11) Veröffentlichungsnummer: **0 225 530 B1**

(12) **EUROPÄISCHE PATENTSCHRIFT**

(45) Veröffentlichungstag der Patentschrift: **22.05.91**

(21) Anmeldenummer: **86116191.7**

(22) Anmeldetag: **22.11.86**

(51) Int. Cl.5: **C09D 201/08**, C09D 5/44, C08G 81/00

(54) Durch Protonieren mit Säure wasserverdünnbares Bindemittel, dessen Herstellung und Verwendung.

(30) Priorität: **03.12.85 DE 3542594**

(43) Veröffentlichungstag der Anmeldung:
**16.06.87 Patentblatt 87/25**

(45) Bekanntmachung des Hinweises auf die
Patenterteilung:
**22.05.91 Patentblatt 91/21**

(84) Benannte Vertragsstaaten:
**AT BE CH DE ES FR GB IT LI NL SE**

(56) Entgegenhaltungen:
EP-A- 0 055 632
DE-A- 2 926 001
DE-A- 2 928 769
US-A- 4 253 930

(73) Patentinhaber: **BASF Lacke + Farben Aktiengesellschaft
Max-Winkelmann-Strasse 80
W-4400 Münster(DE)**

(72) Erfinder: **Schwerzel, Thomas, Dr.
Budapester Strasse 51
W-6700 Ludwigshafen(DE)**
Erfinder: **Osterloh, Rolf, Dr.
Am Wehrhaus 16a
W-6718 Gruenstadt(DE)**
Erfinder: **Schupp, Eberhard, Dr.
Theodor-Storm-Strasse 29
W-6718 Gruenstadt(DE)**
Erfinder: **Ahlers, Klaas, Dr.
Foehrenweg 21
W-4400 Muenster(DE)**

(74) Vertreter: **Schweiss, Werner, Dr. et al
BASF Aktiengesellschaft Patentabteilung
Carl-Bosch-Strasse 38
W-6700 Ludwigshafen(DE)**

## Beschreibung

Die vorliegende Erfindung betrifft ein durch Protonieren mit Säure wasserverdünnbares Bindemittel, dessen Herstellung und Verwendung, insbesondere für die kathodische Elektrotauchlackierung.

Die Verwendung von Polybutadien und Copolymerisaten aus Butadien und anderen Vinylmonomeren zur Herstellung von Lacksystemen für die kathodische Elektrotauchlackierung wurde bereits beschrieben. So bezieht sich zum Beispiel die DE-OS 29 26 001 auf Lacksysteme in denen das Weichsegment (butadienhaltiges Copolymerisat) so in die filmbildende Komponente eingebracht wird, daß ein Polymerisat aus einem konjugierten Dien oder ein Copolymerisat aus einem konjugierten Dien und einem Vinylmonomeren (jeweils mit endständigen Carboxylgruppen) mit einem Epoxidharz umgesetzt wird.

In der DE-OS 29 28 769, der die US-PS 4 253 930 bzw. die JP 54 097 632 inhaltlich entspricht, wird ein Harz beschrieben, das dadurch erhalten wird, daß man eine Epoxygruppen enthaltende Verbindung und ein Carboxylgruppen enthaltendes Butadien/Acrylnitril-Copolymerisat im Verhältnis von 1 Epoxyäquivalent der erstgenannten Verbindung zu etwa 0,2 bis 0,7 Äquivalent der freien Carboxylgrupen des Copolymerisats mit einer Aminogruppen enthaltenden Verbindung und einer teilweise blockierten, Isocyanatgruppen enthaltenden Verbindung umsetzt.

Sowohl nach der DE-OS 29 26 001 als auch nach der DE-OS 29 28 769 werden carboxylgruppenhaltiges Polybutadien bzw. carboxylgruppenhaltiges Butadien/Vinylmonomer-Copolymerisat so eingesetzt, daß die Carboxylgruppen mit den Epoxidgruppen unter Bildung von $\beta$-Hydroxyesterstruktureinheiten reagieren. Diese $\beta$-Hydroxyester sind als reaktive Ester bekannt, was sich z.B. in leichter Verseifbarkeit äußert.

In der US-PS 4 486 571 wird eine Beschichtungsmasse beschrieben, die so erhalten wird, daß man zuerst ein mit sekundären Aminogruppen terminiertes Butadien/Acrylnitril-Copolymer mit Monoepoxiden und dann mit Diepoxiden umsetzt. Anschließend wird dieses epoxymodifizierte Butadien/Acrylnitril-Copolymer mit polyfunktionellen Alkoholen umgesetzt. Dieses Harz wird in Kombination mit einem Amin-Formaldehyd-Harz als Beschichtungsmasse eingesetzt. Weiterhin ist in dieser US-PS beschrieben, daß durch Protonieren der Beschichtungsmasse eine kathodisch abscheidbare Dispersion erhalten werden kann. Die protonierten Stickstoffatome im Bindemittel werden gemäß US-PS 4 486 571 nur über das aminterminierte Butadien/Acrylnitril-Copolymere eingeführt. Nach Neutralisation weisen jedoch aus solchen Beschichtungsmassen hergestellte Elektrotauchbäder niedrige Bad-pH-Werte auf.

Aufgabe der Erfindung ist es, durch Mitverwendung von Butadien/Acrylnitril-Copolymeren im Bindemittel des Lacksystems, Dispersionen herzustellen, aus denen kathaphoretisch abscheidbare Lacke zu erhalten sind, die sich durch hohe Elastizität und gute Korrosionsschutzeigenschaften auszeichnen, und die gleichzeitig in Bezug auf Dispersionsstabilität und anwendungstechnische Eigenschaften, z.B. geringe Anlagenkorrosion und ein gutes Eigenschaftsprofil zeigen.

Diese Aufgabe konnte erfindungsgemäß durch ein Bindemittel gelöst werden, das durch die Umsetzung von primären oder sekundären Amidaminen (A) und Aminen (A, C), die überschüssig im Reaktionsprodukt (A) enthalten sein können oder getrennt (C) zugesetzt werden, mit Epoxidharzen erhalten wird.

Die primären oder sekundären Amidamine erhält man dabei so, daß carboxylgruppenhaltige Butadien/Acrylnitril-Copolymere und ggf. Dicarbonsäuren sowie Monocarbonsäuren mit mehrfunktionellen Aminen umgesetzt werden.

Gegenstand der vorliegenden Erfindung ist ein durch Protonieren mit Säure wasserverdünnbares Bindemittel, erhältlich durch Umsetzung von einem

Reaktionsprodukt einer

A)

    a) carboxylgruppenhaltigen Komponente, bestehend aus einem

        a1) carboxylgruppenhaltigen Butadien/Acrylnitrilcopolymeren mit einem Molekulargewicht von 500 bis 8000,
        gegebenenfalls im Gemisch mit
        a2) einer von a1) verschiedenen Dicarbonsäure mit einem Molekulargewicht von 90 bis 1000 und gegebenenfalls
        a3) einer Monocarbonsäure mit einem Molekulargewicht von 140 bis 500 und einem
    b) diprimären und/oder primären/sekundären Amin mit der Maßgabe, daß 0,7 bis 5 Mol des diprimären und/oder des primären/sekundären Amins pro Mol Carboxylgruppen der Komponente a) eingesetzt werden

mit mindestens einem

B) Epoxidharz mit einem mittleren Molekulargewicht von 300 bis 6000 und im Mittel 1,5 bis 3,0 Epoxidgruppen pro Molekül und gegebenenfalls

C) einem aliphatischen oder cycloaliphatischen sekundären Amin

erhältlich ist.

Vorzugsweise wird als Komponente (A.a1) ein carboxylgruppenhaltiges Butadien/Acrylnitril-Copolymer eingesetzt, das 5 bis 45 % Acrylnitrileinheiten einpolymerisiert und im Mittel 1,5 bis 2,5 Carboxylgruppen im Copolymermolekül enthält, insbesondere ein solches Copolymer, das endständige Carboxylgruppen trägt.

Als Komponente (A.a2) bevorzugte Dicarbonsäuren sind dimerisierte $C_{12}$-$C_{24}$-Fettsäuren ("Dimerfettsäuren"). Als Komponente (A.a3) bevorzugte Monocarbonsäuren sind gesättigte oder ungesättigte $C_{10}$-$C_{24}$-Fettsäuren.

Als sekundäres Amin (C) werden Dialkylamine bevorzugt, die 2 bis 18 Kohlenstoffatome sowie gegebenenfalls noch funktionelle Gruppen enthalten. So können die Alkylketten des sekundären Amins (C) primäre Aminogruppen tragen, die gegebenenfalls ketiminisiert sind.

Gegenstand der vorliegenden Erfindung ist auch ein Verfahren zur Herstellung der erfindungsgemäßen Bindemittel, wobei pro Epoxidgruppe des Epoxidharzes (B) 0,1 bis 0,8 Carboxylgruppen der carboxylgruppenhaltigen Komponente (A.a) eingesetzt werden; die primären Aminogruppen können vor der Umsetzung mit dem Epoxidharz mit einem Keton in Schiff'sche Basen überführt werden.

Außerdem sind die Verwendung des durch Protonieren mit Säure wasserverdünnbaren erfindungsgemäßen Bindemittels in Form einer wäßrigen Dispersion, die zusätzlich Vernetzer und gegebenenfalls Pigmente, organische Lösemittel und/oder weitere Hilfsstoffe enthält, als Überzugsmittel, sowie seine Verwendung für die kathodische Elektrotauchlackierung elektrisch leitfähiger Substrate sowie derartige Überzugsmittel, die neben dem erfindungsgemäßen Bindemittel als Vernetzer ein mehrwertiges geblocktes Isocyanat, ein Aminoplast- oder Phenoplastharz, ein mehrfach aminomethyliertes Polyphenol, ein über Esteraminolyse und/oder Umesterung härtender Vernetzer oder ein Harnstoffkondensationsprodukt enthalten, Gegenstand der Erfindung.

Ebenso sind ein Verfahren zur Herstellung von Überzügen durch kathodische Elektrotauchlackierung aus einem Elektrotauchbad, das ein mit Säure protonierbares erfindungsgemäßes Bindemittel sowie gegebenenfalls zusätzlich Pigmente, organische Lösungsmittel und/oder weitere Hilfsstoffe enthält, sowie ein mit einem Überzug versehener Gegenstand, der mit einem Überzug versehen ist, der durch das Aufbringen und Einbrennen eines Überzugsmittels erhalten worden ist, das das erfindungsgemäße Bindemittel enthält, Gegenstand der Erfindung.

Im Unterschied zur DE-OS 29 26 001 und DE-OS 29 28 769 vermeidet man bei der Herstellung der erfindungsgemäßen Bindemittel die Bildung der reaktiven $\beta$-Hydroxyesterstruktureinheiten.

Die Verwendung von Polyolen, wie sie in der US-PS 4 486 571 beschrieben ist, an Stelle von Aminen, die entweder schon im Reaktionsprodukt (A) enthalten sind oder unter (C) separat zugesetzt werden, würde bei den erfindungsgemäßen Bindemitteln zur Vernetzung führen.

Die Verwendung der Amine an Stelle von Polyolen hat weiterhin den Vorteil, daß zusätzlich noch protonierbare Stickstoffatome eingeführt werden. Dies bedingt, daß schon nach Neutralisation von nur 25 bis 60%, zweckmäßigerweise jedoch 30 bis 50 %, aller basischen Stickstoffatome des Bindemittels stabile Dispersionen erhalten werden. Durch den niedrigen Neutralisationsgrad sind Elektrotauchbäder herstellbar, die sich durch hohe pH-Werte von 6,5 bis 8,5, bevorzugt jedoch von 6,8 bis 8,0 auszeichnen. Das hat zur Folge, daß die zur Badführung benötigten Werkstoffe kaum korrodieren.

Zu den Aufbaukomponenten der erfindungsgemäßen Bindemittel ist im einzelnen folgendes zu sagen:
(A.a1)
Das carboxylgruppenhaltige Butadien/Acrylnitril-Copolymer (A.a1) ist ein Copolymerisat, das auf übliche Weise aus Butadien und Acrylnitril hergestellt wird und zusätzlich noch Carboxylgruppen enthält. Der Acrylnitril-Gehalt des Copolymerisats beträgt im allgemeinen 5 bis 40, bevorzugt 15 bis 35 Gew.%, der Butadien-Gehalt 95 bis 60, bevorzugt 85 bis 65 Gew.%. Pro Molekül sind im Mittel 1,5 bis 3,0, vorzugsweise 1,5 bis 2,5 freie Carboxylgruppen vorhanden, die sich bevorzugt an den Kettenenden befinden. Das Molekulargewicht des Copolymerisats beträgt im allgemeinen 500 bis 8000, bevorzugt jedoch 2500 bis 6000.

Besonders bevorzugt geeignet sind z.B. von der Firma B.F. Goodrich käuflich erhältliche sog. reaktive Flüssigpolymere (Reaktive Liquid Polymers). Hier sind insbesondere die Typen HYCAR® 1300 × 15 CTBN, HYCAR 1300 × 8 CTBN und HYCAR 1300 × 13 CTBN mit 10 %, 18 % und 26 % Acrylnitril zu nennen.
(A.a2)
Als Dicarbonsäuren (A.a2) mit Molekulargewichten von 90 bis 1000 eignen sich z.B. solche mit 6 bis 50 Kohlenstoffatomen, wie z.B. Glutarsäure, Adipinsäure, Pimelinsäure, Suberinsäure, Sebacinsäure und höhere Homologe sowie dimerisierte $C_{12}$-$C_{24}$ Fettsäuren, z.B. $C_{36}$-Dicarbonsäuren.
(A.a3)
Als Monocarbonsäuren (A.a3) mit Molekulargewichten von 140 bis 500 eignen sich z.B. solche mit 8 bis 30

3

EP 0 225 530 B1

Kohlenstoffatomen, bevorzugt jedoch solche mit mehr als 12 Kohlenstoffatomen wie z.B. Palmitinsäure und Stearinsäure aber auch ungesättigte Carbonsäuren wie Ölsäure oder auch mehrfach ungesättigte Fettsäuren wie z.B. Linolsäure und Linolensäure oder deren Gemische.

(A.b)

Als diprimäre Amine sind beispielsweise geeignet Ethylendiamin, 1,3-Diaminopropan, 1,4-Diaminobutan, 1,6-Diaminohexan oder das 2-Methylpentan-1,5-diamin, 4,7-Dioxadekan-1,10-diamin, 4,9-Dioxadodekan-1,12-diamin, 4,4'-Diaminodicyclohexylmethan und 2-(3-Aminopropyl)cyclohexylamin oder deren Gemische. Als primäre/sekundäre Amine können z.B. Aminoethylmethylamin, Aminopropylmethylamin, Aminoethylethylamin verwendet werden. Aber auch Amine, die zusätzlich noch reaktive Gruppen tragen, die unter milden Bedingungen nicht mit Epoxiden reagieren, wie z.B. Aminoethylethanolamin, Aminoethylpropanolamin, Aminopropylethanolamin sind für die Amidaminbildung geeignet.

(B)

Als Epoxidharze (B) können beliebige Epoxidverbindungen verwendet werden, sofern sie ein mittleres Molekulargewicht $\overline{M}_n$ von 300 bis 6000 und im Mittel 1,5 bis 3,0 Epoxidgruppen pro Molekül enthalten, vorzugsweise Verbindungen mit zwei Epoxidgruppen pro Molekül.

Bevorzugt sind Epoxidharze mit mittleren Molekulargewichten $\overline{M}_n$ von 350 bis 5000, insbesondere 350 bis 2000. Besonders bevorzugte Epoxidharze sind zum Beispiel Glycidylether von im Mittel mindestens zwei phenolischen Hydroxylgruppen pro Molekül enthaltenden Polyphenolen, die sich in üblicher Weise durch Veretherung mit einem Epihalohydrin in Gegenwart von Alkali herstellen lassen. Beispiele für geeignete Polyphenole sind Bis-(4-hydroxyphenyl)-2,3-propan, 4,4'-Dihydroxybenzophenon, Bis-(4-hydroxyphenyl)-1,1-ethan, Bis-(4-hydroxyphenyl)-1,1-isobutan, Bis-(4-hydroxy-tert.-butyl-phenyl)-2,2-propan, Bis-(2-hydroxynaphthyl)-methan, 1,5-Dihydroxynaphthalin. In manchen Fällen ist es wünschenswert, aromatische Epoxidharze mit höherem Molekulargewicht einzusetzen. Diese werden erhalten, indem man die oben genannten Diglycidylether mit einem Polyphenol, wie beispielsweise Bis-(4-hydroxyphenyl)-2,2-propan reagieren läßt und dann die erhaltenen Produkte mit Epichlorhydrin unter Herstellung von Polyglycidylethern weiter umsetzt. Desgleichen eignen sich Gemische der genannten Epoxidharze.

(C)

Als gegebenenfalls mitzuverwendende sekundäre Amine (C) kommen in Frage: Diethylamin, Dipropylamin, Dibutylamin, Ethylcyclohexylamin, bevorzugt jedoch Alkanolamine, wie z.B. Methylethanolamin, Ethylethanolamin, Methylisopropanolamin, Diethanolamin, Diisopropanolamin oder deren Gemische.

Zuweilen kann es zweckmäßig sein, bei der Verwendung von diprimären Aminen (A.b) nach der Umsetzung mit den carboxylgruppenhaltigen Komponenten unter Amidaminbildung noch vorhandene primäre Aminofunktionen mit einem geeigneten Keton in eine Schiff'sche Base zu überführen. Dies hat zur Folge, daß diese so verkappten primären Amine sich gegenüber Epoxiden wie sekundäre Amine verhalten, wie in der DE-OS 33 25 061 beschrieben wurde.

Als geeignete Ketone für die Ketiminisierung kommen beispielsweise in Frage: Aceton, Methylethylketon, Methylpropylketon, Methylisopropylketon, Methylisobutylketon, Methylisoamylketon, Diethylketon, Dipropylketon und Cyclohexanon. Besonders bevorzugt sind Aceton, Methylethylketon und Methylisobutylketon.

Die Mengenverhältnisse der Komponenten (A), (B) und (C) sind in weiten Grenzen variierbar, jedoch so zu wählen, daß nach der Umsetzung alle vorhandenen Epoxidgruppen abreagiert haben können.

Im einzelnen geht man zweckmäßigerweise so vor, daß man pro Mol des carboxylterminierten Butadien/Acrylnitril-Copolymeren zwischen 0 bis 15 Mol, bevorzugt jedoch 0,5 bis 8 Mol, Dicarbonsäure und Monocarbonsäure einsetzt.

Die Umsetzung der carboxylgruppenhaltigen Komponenten (A.a) mit den diprimären oder primären/sekundären Aminen (A.b) erfolgt gegebenenfalls in Gegenwart von Lösungsmitteln, bevorzugt solchen Lösungsmitteln, die mit Wasser ein azeotropes Gemisch bilden, z.B. Benzol, Toluol und Xylol, so daß während der Reaktion entstehendes Wasser entfernt werden kann.

Soll nach der Amidaminbildung noch ein Ketiminisierungsschritt von primären Aminogruppen erfolgen, so kann das gewählte Keton in das gegebenenfalls Lösungsmittel enthaltende Reaktionsgemisch hinzugegeben werden. Das entstehende Wasser wird wiederum durch Abdestillieren entfernt. Die Menge an eingesetztem Epoxidharz (B) wird so gewählt, daß das Verhältnis Epoxidgruppen (B) zu eingesetzten Carboxylgruppen der Komponente (A.a) 10:1 bis 10:8, bevorzugt jedoch 10:2 bis 10:7 beträgt. Werden zusätzlich noch sekundäre Amine verwendet, soll das Verhältnis sekundäre Amingruppen (C) zu Epoxidgruppen (B) 0:10 bis 9:10, bevorzugt jedoch 0:10 bis 7:10 betragen.

Die Umsetzung von (A) mit (B) und gegebenenfalls (C) erfolgt ohne oder in den unter (A) verwendeten Lösungsmitteln bei Temperaturen von 40 bis 180 °C, bevorzugt zwischen 70 und 130 °C.

Die aus dieser Reaktion hervorgehenden Bindemittel haben Aminzahlen von 40 bis 250 mg KOH/g

4

Feststoff, bevorzugt jedoch von 50 bis 150 mg KOH/g Feststoff.

Zum Protonieren der Bindemittel können anorganische und organische Säuren eingesetzt werden. Besonders geeignet hierfür sind: Ameisensäure, Essigsäure, Propionsäure, Milchsäure und Phosphorsäure.

Geeignete Vernetzer für die erfindungsgemäßen Bindemittel sind z.B. Aminoplastharze, wie Harnstoff-Formaldehyd-Harze, Melaminharze oder Benzoguanaminharze, geblockte Isocyanatvernetzer, über Esteraminolyse und/oder Umesterung härtende Vernetzer mit im Mittel mindestens zwei aktivierten Estergruppen pro Molekül, z.B. β-Hydroxyalkylester-Vernetzer gemäß EP 0040867 und Carbalkoxymethylester-Vernetzer gemäß der Deutschen Patentanmeldung P 32 33 139.8 und Harnstoffkondensationsprodukte, wie sie in der DE-OS 33 11 514 beschrieben sind.

Das Verhältnis von Bindemittel zu Vernetzer richtet sich nach Art und Anzahl der vernetzungsaktiven Gruppen im Bindemittel und Vernetzer. Im allgemeinen wird das Bindemittel/Vernetzer-Verhältnis 1:9 bis 9:1, bevorzugt jedoch 1:1 bis 9:1, besonders bevorzugt 1,5:1 bis 4:1, bezogen auf Gewichtsteile, betragen.

Außer den Vernetzern können dem Bindemittel noch weitere Stoffe, wie Pigmente, Hilfsmittel, Lösungsmittel und Härtungskatalysatoren zugesetzt werden. Die so hergestellten Überzugsmittel können durch übliche Methoden, wie Spritzen, Tauchen, Gießen und Rakeln auf Substrate, wie Holz, Glas, Kunststoff oder Metall aufgebracht werden. Die Aushärtung der Überzüge erfolgt je nach Art des Vernetzers zwischen 80 und 220° C während 3 bis 40 Minuten.

Für die kathodische Elektrotauchlackierung wird im allgemeinen ein Feststoffgehalt des Elektrotauchbades von 5 bis 45 %, bevorzugt 10 bis 30 %, eingestellt. Die Abscheidung erfolgt üblicherweise bei Temperaturen von 15 bis 40° C während 30 bis 360 Sekunden. Der pH-Wert des Bades liegt im allgemeinen zwischen 4,5 und 9,0, bevorzugt zwischen 5,0 und 8,0, insbesondere zwischen 6,8 und 8,2. Die Abscheidespannung liegt üblicherweise zwischen 50 und 500 Volt. Der zu beschichtende Gegenstand wird als Kathode geschaltet. Der abgeschiedene Film wird gegebenenfalls nach Abspülen bei Temperaturen > 90° C eingebrannt.

Bindemittel 1

148 g eines carboxylgruppenhaltigen Butadien/Acrylnitril-Copolymeren mit einem Acrylnitrilgehalt von 27 Gew.-%, einem Carboxylgehalt von 2,4 Gew.-% bei einer Funktionalität von 1,85 und einem Molekulargewicht von 3500, 28,6 g dimerisierte $C_{18}$-Fettsäure (Pripol 1014), 23 g Stearinsäure und 58 g Hexamethylendiamin wurden in 110 g Toluol auf 160° C erhitzt. Man hielt diese Temperatur bis kein Reaktionswasser mehr entstand. Man ließ abkühlen und setzte 100 g Methylisobutylketon zu, erwärmte und kreiste entstehendes Reaktionswasser aus. Dann setzte man 686 g einer 70 gew.-%igen toluolischen Lösung eines wasserfreien Diglycidylethers aus Bis-(4-hydroxyphenyl)-2,2-propan und Epichlorhydrin mit dem Äquivalentgewicht von 485, 52,5 g Diethanolamin und 23 g Toluol hinzu und ließ 4 Stunden bei 100° C rühren. Man stellte auf einen Festgehalt von 70 Gew.-% ein.

Bindemittel 2

184 g des im Bindemittel 1 verwendeten carboxylgruppenhaltigen Butadien/Acrylnitril-Copolymers, 62,9 g dimerisierte $C_{18}$-Fettsäure, 23 g Stearinsäure und 67,3 g Hexamethylendiamin wurden in Toluol auf 160° C erhitzt und entstehendes Wasser ausgekreist. Danach gab man 110 g Methylisobutylketon hinzu und fuhr mit der Entfernung des Reaktionswassers fort. Man versetzte das Gemisch mit 565 g 85 gew.-%iger toluolischer Lösung eines wasserfreien Diglycidylethers aus Bis-(4-hydroxyphenyl)-2,2-propan und Epichlorhydrin mit dem Äquivalentgewicht von 485, 42 g Diethanolamin und 85 g Toluol, erhitzte 4 Stunden auf 100° C und verdünnte nach dem Abkühlen mit Isobutanol auf einen Feststoffgehalt von 70 Gew.-%.

Bindemittel 3

Reaktionsprodukt A

1217,3 g das Butadien/Arcylnitril-Copolymers des Bindemittels 1, 547,2 g dimerisierte $C_{18}$-Fettsäure, 181,6 g Stearinsäure und 538,2 g Hexamethylendiamin wurden in 809 g Toluol gelöst. Bei 160° C kreiste man entstehendes Reaktionswasser aus. Man stellte mit Toluol einen Feststoffgehalt von 75 Gew.-% ein.

Bindemittel

685,7 g eines Diglycidylethers aus Bis-(4-hydroxyphenyl)-2,2-propan und Epichlorhydrin mit dem Äquivalentgewicht von 485 (70 gew.%ig in Toluol) wurden auf 80 °C erwärmt. Man tropfte 36 g Ethylethanolamin hinzu und hielt 20 Minuten bei 80 °C. Dann versetzte man mit 405 g des unter A beschriebenen Reaktionsproduktes und hielt noch 2 Stunden bei 100 °C. Man stellte einen Festgehalt von 70 Gew.-% ein.

Vernetzer 1

504 g trimerisiertes Hexamethylendiisocyanat wurden in 382 g Methylisobutylketon gelöst. Unter Kühlen tropfte man bei 70 °C 388 g Dibutylamin hinzu. Man rührte bis der Isocyanat-Wert nahe Null ist.

Vernetzer 2

1340 g Trimethylolpropan, 3600 g Harnstoff, 3870 g Dibutylamin, 1740 g Hexamethylendiamin und 3570 g 3,3'-Dimethyl-4,4'-diaminodi cyclohexylamin wurden langsam hochgeheizt. Ab 120 °C kam es zur Abspaltung von Ammoniak und der Harnstoff ging in Lösung. Innerhalb von 2 Stunden wurde die Temperatur auf 155 °C erhöht, wobei starker Rückfluß auftrat und große Mengen eines weißen, kristallinen Niederschlags ausfielen. Nach weiteren 5 Stunden unter Rückfluß hatte sich der Niederschlag wieder aufgelöst und eine Temperatur von 165 °C war erreicht. Nun wurden innerhalb von 2 Stunden 3870 g Dibutylamin zugetropft und nach beendeter Zugabe noch 8 Stunden auf 185 °C erhitzt. Anschließend wurden bei dieser Temperatur 3600 g Dibutylamin im Vakuum abgezogen und nach dem Abkühlen auf 130 °C mit 5170 g Toluol verdünnt. Das erhaltene Produkt war eine farblose, viskose Flüssigkeit mit einem Festgehalt von 70 Gew.-%.

Dispersionen

Das Bindemittel wurde mit dem Vernetzer und der Essigsäure innig gemischt. Anschließend ließ man langsam Wasser zutropfen. Die Mengenangaben sind in der folgenden Tabelle zusammengefaßt.

| Disper-sion | Binde-mittel | Menge [g] | Ver-netzer | Menge [g] | Essig-säure [g] | Wasser [g] |
|---|---|---|---|---|---|---|
| 1 | 1 | 820 | 1 | 343 | 20 | 1141 |
| 2 | 1 | 820 | 2 | 343 | 20 | 1141 |
| 3 | 2 | 820 | 2 | 343 | 21 | 1133 |
| 4 | 3 | 790 | 2 | 303 | 21 | 1150 |

Pigmentpaste

Zu 525,8 g Bindemittel 1 gab man 168,7 g Butylglykol, 600 g Wasser und 15,7 g Essigsäure. Dann setzte man 800 g Titandioxid, 11,0 g Ruß und 50 g basisches Bleisilicat hinzu. Es wurde auf einer Kugelmühle bis zu einer Korngröße < 9 µm gemahlen. Anschließend stellte man mit Wasser einen Festgehalt von 49 Gew.-% ein.

Elektrotauchbäder

Zu 1980 g der Dispersion (35 gew.-%ig) gab man 764 g der Pigmentpaste, rührte innig durch und füllte mit Wasser auf 5000 g auf. Die Bäder wurden 120 Stunden bei 28 °C gerührt. An kathodisch geschalteten

EP 0 225 530 B1

zinkphosphatierten Prüftafeln aus Stahl wurden Lackfilme innerhalb 120 Sekunden bei der angegebenen Spannung abgeschieden und 20 Minuten bei 170° C eingebrannt. Die folgende Tabelle zeigt die Ergebnisse:

| Lackierung | Abscheide-spannung | Bad-pH-Wert | Umgriff nach Ford | Schlag-tiefung*) Nm | 720 Stunden SSK**) |
|---|---|---|---|---|---|
| Dispersion 1 | 250 V | 7,3 | 20,0 cm | 18,08 | 0,4 mm |
| Dispersion 2 | 230 V | 7,2 | 19,5 cm | 18,08 | 0,2 mm |
| Dispersion 3 | 320 V | 7,2 | 21,0 cm | 18,08 | 0,3 mm |
| Dispersion 4 | 280 V | 6,9 | 21,0 cm | 18,08 | 0,5 mm |

*) Die Schlagtiefung wurde mit einem mandrel impact tester der Fa. Gardner nach ASTM D 2794 bestimmt

**) 720 Stunden SSK: Unterwanderung am Ritz nach 720 Stunden Salzsprühnebelbelastung (nach DIN 50021)

**Ansprüche**

1. Durch Protonieren mit Säure wasserverdünnbare Bindemittel, erhältlich durch Umsetzung von einem
    A) Reaktionsprodukt einer
        a) carboxylgruppenhaltigen Komponente, bestehend aus einem
            a1) carboxylgruppenhaltigen Butadien/Acrylnitrilcopolymeren mit einem Molekulargewicht von 500 bis 8000,
            gegebenenfalls im Gemisch mit
            a2) einer von a1) verschiedenen Dicarbonsäure mit einem Molekulargewicht von 90 bis 1000 und gegebenenfalls
            a3) einer Monocarbonsäure mit einem Molekulargewicht von 140 bis 500 und einem
        b) diprimären und/oder primären/sekundären Amin mit der Maßgabe, daß 0,7 bis 5 Mol des diprimären und/oder des primären/sekundären Amins pro Mol Carboxylgruppen der Komponente a) eingesetzt werden mit mindestens einem
    B) Epoxidharz mit einem mittleren Molekulargewicht von 300 bis 6000 und im Mittel 1,5 bis 3,0 Epoxidgruppen pro Molekül und gegebenenfalls
    C) einem sekundären aliphatischen oder cycloaliphatischen Amin.

2. Bindemittel nach Anspruch 1, in denen die Komponente (A.a1) ein carboxylgruppenhaltiges Butadien/Acrylnitril-Copolymer ist, das 5 bis 45 % Acrylnitrileinheiten einpolymerisiert und im Mittel 1,5 bis 2,5 Carboxylgruppen im Copolymermolekül enthält.

3. Bindemittel nach Anspruch 1 oder 2, in denen das carboxylgruppenhaltige Butadien/Acrylnitril-Copolymer (A.a1) endständige Carboxylgruppen trägt.

4. Bindemittel nach den Ansprüchen 1 bis 3, in denen die als Komponente (A.a2) eingesetzte Dicarbonsäure eine dimerisierte $C_{12}$-$C_{24}$-Fettsäure ("Dimerfettsäure") ist.

5. Bindemittel nach den Ansprüchen 1 bis 4 in denen das sekundäre Amin (C) ein Dialkylamin ist, das 2 bis 18 Kohlenstoffatome sowie gegebenenfalls noch funktionelle Gruppen enthält.

6. Bindemittel nach Anspruch 5, in denen die Alkylketten des sekundären Amins (C) primäre Aminogruppen tragen, die gegebenenfalls ketiminisiert sind.

7

EP 0 225 530 B1

7. Verfahren zur Herstellung eines Bindemittels nach Anspruch 1, dadurch gekennzeichnet, daß man
A) durch Kondensationsreaktion in einem organischen Lösungsmittel oder ohne die Verwendung von Lösungsmitteln eine
a) carboxylgruppenhaltigen Komponente, bestehend aus einem
a1) carboxylgruppenhaltigen Butadien/Acrylnitrilcopolymeren mit einem Molekulargewicht von 500 bis 8000,
gegebenenfalls im Gemisch mit
a2) einer von a1) verschiedenen Dicarbonsäure mit einem Molekulargewicht von 90 bis 1000 und gegebenenfalls
a3) einer Monocarbonsäure mit einem Molekulargewicht von 140 bis 500 und einem bei Temperaturen bis 200° C unter Abdestillieren des Reaktionswassers mit einem
b) diprimären und/oder primären/sekundären Amin umsetzt mit der Maßgabe, daß 0,7 bis 5 Mol des diprimären und/oder des primären/sekundären Amins pro Mol Carboxylgruppen der Komponente a) eingesetzt werden und dieses Kondensationsprodukt mit mindestens einem
B) Epoxidharz mit einem mittleren Molekulargewicht von 300 bis 6000 und im Mittel 1,5 bis 3,0 Epoxidgruppen pro Molekül und gegebenenfalls
C) einem sekundären aliphatischen oder cycloaliphatischen Amin bei Temperaturen von 40-180° C umsetzt.

8. Verwendung des durch Protonieren mit Säure wasserverdünnbaren Bindemittels gemäß den Ansprüchen 1 bis 7 in Form einer wäßrigen Dispersion, die zusätzlich Vernetzer und gegebenenfals Pigmente, organische Lösemittel und/oder weitere Hilfsstoffe enthält, als Überzugsmittel.

9. Verwendung der Überzugsmittel nach Anspruch 8 für die kathodische Elektrotauchlackierung elektrisch leitfähiger Substrate.

10. Überzugsmittel nach Anspruch 8, in denen der Vernetzer ein mehrwertiges geblocktes Isocyanat, ein Aminoplast- oder Phenoplastharz, ein mehrfach aminomethyliertes Polyphenol, ein über Esteraminolyse und/oder Umesterung härtender Vernetzer oder ein Harnstoffkondensationsprodukt ist.

## Claims

1. A binder which is rendered water-dilutable by protonation with an acid, and which is obtainable by reacting the
A) Reaction product of a
a) carboxyl-containing component, consisting of a
a1) carboxyl-containing butadiene/acrylonitrile copolymer having a molecular weight of from 500 to 8,000, if necessary as a mixture with
a2) a dicarboxylic acid which differs from a1) and has a molecular weight of from 90 to 1,000 and, if appropriate,
a3) a monocarboxylic acid having a molecular weight of from 140 to 500 and
b) a diprimary and/or primary/secondary amine, with the proviso that from 0.7 to 5 moles of the said amine are used per mole of carboxyl groups of component a), with one or more
B) epoxy resins having a mean molecular weight from 300 to 6,000 and containing on average from 1.5 to 3.0 epoxide groups per molecule and, if required,
C) an aliphatic or cycloaliphatic secondary amine.

2. A binder as claimed in claim 1, wherein component (A.a1) is a carboxyl-containing butadiene/acrylonitrile copolymer which contains from 5 to 45% by weight of acrylonitrile units as copolymerized units and possesses on average from 1.5 to 2.5 carboxyl groups in the copolymer molecule.

3. A binder as claimed in claim 1 or 2, wherein the carboxyl-containing butadiene/acrylonitrile copolymer (A.a1) carries terminal carboxyl groups.

4. A binder as claimed in any of claims 1 to 3, wherein the dicarboxylic acid used as component (A.a2) is a dimerized $C_{12}$-$C_{24}$-fatty acid (dimer fatty acid).

5. A binder as claimed in any of claims 1 to 4, wherein the secondary amine (C) is a dialkylamine which contains 2 to 18 carbon atoms and may furthermore contain functional groups.

6. A binder as claimed in claim 5, wherein the alkyl chains of the secondary amine (C) carry primary amino groups which may or may not be converted to the ketimine.

7. A process for the preparation of a binder as claimed in claim 1, wherein
   A) by means of a condensation reaction in the presence or absence of an organic solvent, a
   a) carboxyl-containing component, consisting of a
   a1) carboxyl-containing butadiene/acrylonitrile copolymer having a molecular weight of from 500 to 8,000, if necessary as a mixture with
   a2) a dicarboxylic acid which differs from a1) and has a molecular weight of from 90 to 1,000 and, if appropriate,
   a3) a monocarboxylic acid having a molecular weight of from 140 to 500, is reacted, at up to 200°C, with removal of the water of reaction by distillation, with a
   b) diprimary and/or primary/secondary amine, with the proviso that from 0.7 to 5 moles of the diprimary and/or primary/secondary amine are used per mole of carboxyl groups of component a), and this condensate is reacted with one or more
   B) epoxy resins having a mean molecular weight of from 300 to 6,000 and possessing on average from 1.5 to 3.0 epoxide groups per molecule, and, if required,
   C) an aliphatic or cycloaliphatic secondary amine, at 40-180°C.

8. The use of a binder rendered water-dilutable by protonation with an acid as claimed in any of claims 1 to 7 in the form of an aqueous dispersion which additionally contains crosslinkers with or without pigments, organic solvents and/or further assistants, as a coating material.

9. The use of a coating material as set forth in claim 8, for the cathodic electrocoating of an electrically conductive substrate.

10. A coating material as claimed in claim 8, wherein the crosslinking agent is a polyvalent blocked isocyanate, an aminoplast or phenoplast resin, a polyaminomethylated polyphenol, a crosslinking agent which cures via ester aminolysis and/or transesterification, or a urea condensate.

## Revendications

1. Liant diluable à l'eau par protonation avec un acide, pouvant être obtenu par la mise en réaction
   A) d'un produit de réaction
   a) d'un composant contenant des groupements carboxyle, constitué par
   a1) un copolymère butadiène/acrylonitrile contenant des groupements carboxyle et ayant un poids moléculaire de 500 à 8000, éventuellement en mélange avec
   a2) un acide dicarboxylique différent de a1), ayant un poids moléculaire de 90 à 1000, et éventuellement avec
   a3) un acide monocarboxylique ayant un poids moléculaire de 140 à 500, et
   b) d'une amine diprimaire et/ou primaire/secondaire, étant spécifié que 0,7 à 5 moles de l'amine diprimaire et/ou de l'amine primaire/secondaire sont utilisées par mole de groupements carboxyle du composant a), avec au moins
   B) un résine époxy ayant un poids moléculaire moyen de 300 à 6000 et renfermant en moyenne 1,5 à 3,0 groupements époxy par molécule, et éventuellement
   C) une amine aliphatique ou cycloaliphatique secondaire.

2. Liant selon la revendication 1, dans lequel le composant (A.a1) est un copolymère butadiène/acrylonitrile contenant des groupements carboxyle qui renferme de 5 à 45% de motifs acrylonitrile en liaison polymère et en moyenne de 1,5 à 2,5 groupements carboxyle dans la molécule de copolymère.

3. Liant selon la revendication 1 ou 2, dans lequel le copolymère butadiène/acrylonitrile contenant des groupements carboxyle (A.a1) porte des groupements carboxyle en fin de chaîne.

**4.** Liant selon l'une quelconque des revendications 1 à 3, dans lequel l'acide dicarboxylique utilisé comme composant (A.a2) est un acide gras en $C_{12}$-$C_{24}$ dimérisé ("acide gras dimère").

**5.** Liant selon l'une quelconque des revendications 1 à 4, dans lequel l'amine secondaire (C) est une dialkylamine qui contient de 2 à 18 atomes de carbone et éventuellement encore des groupements fonctionnels.

**6.** Liant selon la revendication 5, dans lequel les chaînes alkyle de l'amine secondaire (C) portent des groupements amino primaires qui sont éventuellement cétiminisés.

**7.** Procédé de préparation d'un liant selon la revendication 1, caractérisé en ce que

A) l'on fait réagir par réaction de condensation dans un solvant organique ou sans utilisation de solvant

a) un composant contenant des groupements carboxyle, constitué par

a1) un copolymère butadiène/acrylonitrile contenant des groupements carboxyle et ayant un poids moléculaire de 500 à 8000,

éventuellement en mélange avec

a2) un acide dicarboxylique différent de a1), ayant un poids moléculaire de 90 à 1000, et éventuellement avec

a3) un acide monocarboxylique ayant un poids moléculaire de 140 à 500, a des températures allant jusqu'à 200° C avec élimination de l'eau de réaction par distillation, avec

b) une amine diprimaire et/ou primaire/secondaire, étant spécifié que 0,7 à 5 moles de l'amine diprimaire et/ou de l'amine primaire/secondaire sont utilisées par mole de groupements carboxyle du composant a), et on fait réagir ce produit de condensation, à une température de 40 à 180° C, avec au moins

B) un résine époxy ayant un poids moléculaire moyen de 300 à 6000 et renfermant en moyenne 1,5 à 3,0 groupements époxy par molécule, et éventuellement

C) une amine aliphatique ou cycloaliphatique secondaire.

**8.** Utilisation du liant diluable à l'eau par protonation avec un acide selon l'une quelconque des revendications 1 à 7, sous forme d'une dispersion aqueuse qui contient en outre des réticulants et éventuellement des pigments, des solvants organiques et/ou d'autres produits auxiliaires, comme matériau de recouvrement.

**9.** Utilisation du matériau de recouvrement selon la revendication 8 pour le trempage électrophorétique cathodique de substrats électroconducteurs.

**10.** Matériau de recouvrement selon la revendication 8, dans lequel le réticulant est un isocyanate polyvalent bloqué, une résine aminoplaste ou phénoplaste, un polyphénol aminométhylé plusieurs fois, un réticulant qui durcit par esteraminolyse et/ou transestérification ou un produit de condensation d'urée.